(19) Europäisches Patentamt
European Patent Office
Office européen des brevets

(11) Publication number: 0 016 882
B1

(12) EUROPEAN PATENT SPECIFICATION

(45) Date of publication of patent specification: 27.07.83

(51) Int. Cl.³: C 08 L 33/20, C 08 L 33/12, C 08 L 51/04

(21) Application number: 79300539.8

(22) Date of filing: 02.04.79

# (54) Copolymer blends.

(43) Date of publication of application:
15.10.80 Bulletin 80/21

(45) Publication of the grant of the patent:
27.07.83 Bulletin 83/30

(84) Designated Contracting States:
BE CH DE FR GB IT LU NL SE

(56) References cited:
US - A - 3 463 833
US - A - 3 775 518
US - A - 3 907 932
US - A - 3 914 337
US - A - 3 917 748
US - A - 3 922 321
US - A - 3 956 424
US - A - 3 984 499
US - A - 3 997 628
US - A - 4 021 509
US - A - 4 025 581
US - A - 4 160 001

(73) Proprietor: THE STANDARD OIL COMPANY
Midland Building
Cleveland, Ohio 44115 (US)

(72) Inventor: Rosen, Irving
4800 Walford Road Warrensville Heights
Ohio 44128 Cuyahoga County (US)

(74) Representative: Smith, Sydney et al,
Elkington and Fife High Holborn House 52/54
High Holborn
London WC1V 6SH (GB)

EP 0 016 882 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Copolymer blends

This invention relates to novel blends of a copolymer of methyl methacrylate and styrene with a nitrile copolymer.

Copolymers derived from the polymerisation of monomer mixtures having a substantial proportion of olefinically unsaturated nitrile, in particular acrylonitrile, as monomer component have low permeability to gases and are well known in the art, see for example US—A—3914337.

Resins formed by the copolymerisation of methyl methacrylate and styrene are also known. The monomers may also make up part of polymeric products containing acrylonitrile and thus barrier resin compositions comprising a copolymer of acrylonitrile, styrene and methyl methacrylate are known in the art see for example US—A—4025581. As disclosed in that specification the barrier resin compositions may be blended with an impact modifier which is a graft of a superstrate interpolymer onto a substrate polymer. The superstrate polymer contains 50 to 90% of acrylonitrile and thus the impact modifier has itself gas barrier properties. In that specification it is stated that the impact modifier compositions disclosed therein are useful with other barrier compositions than those disclosed in that specification.

The barrier resins containing a substantial proportion of olefinically unsaturated nitrile, such as acrylonitrile are expensive to produce.

We have found that if a polymer of methyl methacrylate and styrene is blended with such a high nitrile barrier resin, the gas barrier properties of the high nitrile resin are substantially maintained or improved.

The results are unexpected because the gas barrier properties of the methyl methacrylate: styrene polymer are considerably worse than those of the high nitrile resin.

According to the invention there is provided a blend of two thermoplastic resins comprising a first copolymer component (I) which copolymer component has been prepared by the polymerisation of 100 parts by weight of

(A) more than 50% by weight of at least one olefinically unsaturated nitrile and

(B) less than 50% by weight, based on the combined weights of (A) plus (B) of a monomer component copolymerisable with the olefinically unsaturated nitrile, in the presence of from 0 to 40 parts by weight of

(C) a rubbery polymer of a conjugated diene monomer and optionally at least one comonomer which is a vinyl aromatic monomer, an olefinically unsaturated nitrile or an ester of the formula

$$\begin{array}{l} CH_2{=}C{-}COOR_2 \\ \quad\;\;| \\ \quad\;\;R_1 \end{array}$$

in which $R_1$ represents hydrogen, an alkyl group having from 1 to 4 carbon atoms or a halogen, and $R_2$ is an alkyl group having from 1 to 6 carbon atoms, which rubbery polymer contains from 50 to 100% by weight of polymerised conjugated diene and from 0 to 50% by weight of comonomer, and a second copolymer component (II) characterised in that the second copolymer component (II) is a copolymer of methyl methacrylate and styrene containing from 50 to 70% by weight of methyl methacrylate and from 50 to 30% by weight of styrene and in that the blend contains from 50 to 98% by weight of copolymer component (I) and from 50 to 2% by weight of copolymer component II.

The thermoplastic nitrile resins which can be used in the present invention are prepared by polymerizing a major portion of an olefinically unsaturated nitrile, such as acrylonitrile, and a minor portion of another monomer component copolymerisable with the olefinically unsaturated nitrile, and optionally a conjugated diene rubber.

The conjugated diene monomers which can be used in the present invention include butadiene-1,3, isoprene, chloroprene, bromoprene, cyanoprene, 2,3-dimethyl butadiene-1,3, 2-ethyl butadiene-1,3 and 2,3-diethyl butadiene-1,3. Most preferred are butadiene and isoprene.

The olefinically unsaturated nitriles which are preferably used in the present invention are the alpha, beta-olefinically unsaturated mononitriles having the structure

$$\begin{array}{l} CH_2{=}C{-}CN \\ \quad\;\;| \\ \quad\;\;R \end{array}$$

in which R represents hydrogen, an alkyl group having from 1 to 4 carbon atoms, or a halogen. Such compounds include acrylonitrile, alpha-chloroacrylonitrile, alpha-fluoroacrylonitrile, methacrylonitrile and ethacrylonitrile. The most preferred are acrylonitrile, methacrylonitrile, and mixtures thereof.

The monomer components copolymerisable with the nitrile monomers include the vinyl aromatic monomers, in particular styrene, alphamethyl styrene, the vinyl toluenes and the vinyl xylenes. Most preferred is styrene.

The nitrile polymers which are preferably used in the present invention are those prepared by the polymerization of 100 parts by weight of (A) more than 50% by weight of at least one nitrile having the structure

$$\begin{array}{l} CH_2{=}C{-}CN \\ \quad\;\;| \\ \quad\;\;R \end{array}$$

in which R is as defined above and (B) less than 50% by weight based on the combined weight

of (A) plus (B) of styrene, in the presence of from 0 to 40 parts by weight of (C) a rubbery polymer of butadiene or isoprene and optionally at least one comonomer which is styrene, a nitrile monomer having the structure

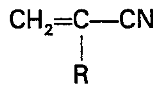

in which R is as defined above, and an ester having the structure

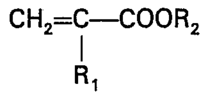

in which $R_1$ represents hydrogen, an alkyl group having from 1 to 4 carbon atoms, or a halogen, and $R_2$ represents an alkyl group having from 1 to 6 carbon atoms, the rubbery polymer containing from 50 to 100% by weight of polymerized conjugated diene and from 0 to 50% by weight of comonomer. In the nitrile copolymers, it is preferred that (A) is present at a concentration of from 70 to 90% by weight and (B) to present at a concentration of 30 to 10% by weight.

The copolymers of methyl methacrylate and styrene used in the present invention are those which contain from 50 to 70% by weight of methyl methacrylate and from 50 to 30% by weight of styrene.

The blends of methyl methacrylate-styrene copolymers with the nitrile copolymers contain from 2 to 50% by weight, preferably 5 to 50% by weight, of the methyl methacrylate-styrene copolymer and from 98 to 50% by weight, preferably 95 to 50% by weight, of the nitrile copolymer.

The methyl methacrylate-styrene copolymer and the nitrile copolymer components of the blends of this invention can each be prepared by any of the known general techniques of polymerization, including the bulk polymerization, solution polymerization, and emulsion or suspension polymerization techniques by batch, continuous, or intermittent addition of the monomers and other components. These copolymers are usually prepared in aqueous medium in the presence of an emulsifying or suspending agent and a free-radical generating polymerization initiator at a temperature of from 0 to 100°C, in the substantial absence of molecular oxygen.

The novel polymeric blends of this invention are readily processed thermoplastic materials which can be thermoformed into a wide variety of useful articles in any of the conventional ways such as by milling, extrusion, molding, drawing and blowing. The polymeric blends of this invention have excellent solvent resistance and their low permeability to gases and impact resistance in the case where rubber modified make them useful in the manufacture of pipes, conduits, rods, bottles, film, sheets and coatings.

In the followings illustrative examples, the amounts of ingredients are expressed in parts by weight unless otherwise indicated.

Example 1

A. A blend of 5 parts by weight of a 60:40 percent by weight copolymer of methyl methacrylate: styrene and 95 parts by weight of a uniform copolymer of 80:20 percent by weight copolymer of acrylonitrile:styrene was prepared by milling the mixture on a two-roll mill at 160°C for 4 minutes followed by compression moulding of test plaques at 160°C and $68 \times 10^6$ barye gauge.

The oxygen transmission was determined on a film pressed from a plaque employing an Oxtran 1050 instrument at 23°C and 100% relative humidity. The oxygen transmission rate was found to be 0.1 cc/0.00254 cm/sq. dm/24 hours/atmosphere (0.1 cc/mil/sq. dm/24 hours/atmosphere). Other properties for this blend were $43{,}000 \times 10^6$ barye flexural modulus and 95°C ASTM heat-distortion temperature at $18 \times 10^6$ barye.

B. A repeat of A above except that 100 parts of 60:40 methyl methacrylate:styrene copolymer and no acrylonitrile:styrene copolymer were used produced a polymer plaque which is outside the scope of this invention and which was found to have the following properties: oxygen transmission rate 6.2 cc/0.00254 cm/sq. dm/24 hours/atmosphere (6.2 cc/mil/sq. dm/24 hours/atmosphere), flexural modulus $33{,}000 \times 10^6$ barye and ASTM heat-distortion temperature 86°C at $18 \times 10^6$ barye.

C. A repeat of A above using 100 parts by weight of the 80:20 acrylonitrile:styrene copolymer produced a plaque which is outside the scope of this invention having the following properties: oxygen transmission rate 0.1 cc/0.00254 cm/sq. dm/24 hours/atmosphere (0.1 cc/mil/sq. dm/24 hours/atmosphere), flexural modulus $44{,}000 \times 10^6$ bayre and ASTM heat distortion temperatures 93°C at $18 \times 10^6$ barye.

Example 2

A repeat of Example 1A using 50 parts by weight of the 60:40 copolymer of methyl methacrylate:styrene and 50 parts by weight of the copolymer of 80:20 acrylonitrile:styrene produced a blend having an oxygen transmission rate of 0.6 cc/0.00254 cm/sq. dm/24 hours/atmosphere (0.6 cc/mil/sq. dm/24 hours/atmosphere), a flexural modulus of $39{,}300 \times 10^6$ barye and an ASTM heat-distortion temperature of 88°C at $18 \times 10^6$ barye.

Example 3

A repeat of Example 1A using 15 parts by weight of the 60:40 copolymer of methyl methacrylate:styrene and 85 parts by weight of

the 80:20 copolymer of acrylonitrile:styrene produced a blend having an oxygen transmission rate of 0.15 cc/0.00254 cm/sq. dm/24 hours/atmosphere (0.15 cc/mil/sq. dm/24 hours/atmosphere), a flexural modulus of $41{,}000 \times 10^6$ barye and an ASTM heat-distortion temperature of 93°C at $18 \times 10^6$ barye.

Example 4

A. The procedure of Example 1A was repeated using 15 parts of the 60:40 copolymer of methyl methacrylate:styrene and 85 parts of a uniform copolymer of 70:30 percent by weight of acrylonitrile:styrene prepared in the presence of 5 parts by weight of a styrene:butadiene rubber (30:70). The resulting blend had the following properties: oxgyen transmission rate 0.3 cc/0.00254 cm/sq. dm/24 hours/atmosphere (0.3 cc/mil/sq. dm/24 hours/atmosphere), flexural modulus $37{,}000 \times 10^6$ barye and ASTM heat-distortion temperature 92°C at $18 \times 10^6$ barye.

B. A repeat of A of this example using 100 parts of the rubber-modified acrylonitrile:styrene copolymer and no methyl methacrylate:styrene copolymer produced a material which is outside the scope of this invention having the following properties: oxygen transmission rate 0.5 cc/0.00254 cm/sq. dm/24 hours/atmosphere (0.5 cc/mil/sq. dm/24 hours/atmosphere), flexural modulus $34{,}000 \times 10^6$ barye and ASTM heat-distortion temperature 90°C at $18 \times 10^6$ barye.

**Claims**

1. A blend of two thermoplastic resins comprising a first copolymer component (I) which copolymer component has been prepared by the polymerisation of 100 parts by weight of

(A) more than 50% by weight of at least one olefinically unsaturated nitrile and

(B) less than 50% by weight, based on the combined weights of (A) plus (B) of a monomer component copolymerisable with the olefinically unsaturated nitrile, in the presence of from 0 to 40 parts by weight of

(C) a rubbery polymer of a conjugated diene monomer and optionally at least one comonomer which is a vinyl aromatic monomer, an olefinically unsaturated nitrile or an ester of the formula

$CH_2{=}C{-}COOR_2$
|
$R_1$

in which $R_1$ represents hydrogen, an alkyl group having from 1 to 4 carbon atoms or a halogen, and $R_2$ is an alkyl group having from 1 to 6 carbon atoms, which rubbery polymer contains from 50 to 100% by weight of polymerised conjugated diene and from 0 to 50% by weight of comonomer, and a second copolymer component (II) characterised in that the second copolymer component (II) is a copolymer of methyl methacrylate and styrene containing from 50 to 70% by weight of methyl methacrylate and from 50 to 30% by weight of styrene and in that the blend contains from 50 to 98% by weight of copolymer component (I) and from 50 to 2% by weight of copolymer component (II).

2. A blend as claimed in claim 1 in which the olefinically unsaturated nitrile of component I(A) is an $\alpha,\beta$-olefinically unsaturated mononitrile having the formula

$CH_2{=}C{-}CN$
|
R

in which R represents hydrogen, an alkyl group having from 1 to 4 carbon atoms or a halogen.

3. A blend as claimed in claim 2 in which the nitrile is acrylonitrile.

4. A blend as claimed in any of claims 1 to 3 in which the monomer component I(B) is a vinyl aromatic monomer.

5. A blend as claimed in claim 4 in which the vinyl aromatic monomer is styrene.

6. A blend as claimed in any of claims 1 to 5 in which the conjugated diene monomer is butadiene or isoprene.

7. A blend as claimed in claim 6 in which the rubbery polymer I(C) is a butadiene-styrene rubber.

8. A blend as claimed in any of claims 1 to 7 which contains from 50 to 95% by weight of component (I) and 50 to 5% by weight of component (II).

9. A blend as claimed in any of claims 1 to 9 in which component I contains from 70 to 90% by weight of component (A) and from 30 to 10% by weight of component (B).

**Patentansprüche**

1. Mischung aus zwei thermoplastischen Harzen mit einer ersten Copolymerkomponente (I), die hergestellt worden ist durch Polymerisation von 100 Gew.-Teilen aus

A) mehr als 50 Gew.-% mindestens eines olefinisch ungesättigten Nitrils und

B) weniger als 50 Gew.-%, bezogen auf das Gesamtgewicht von (A) plus (B), einer mit dem olefinisch ungesättigten Nitril copolymerisierbaren Monomerkomponente, in Gegenwart von 0 bis 40 Gew.-Teilen

C) eines kautschukartigen Polymeren eines konjugierten Dienmonomeren und gegebenenfalls mindestens eines Co-monomeren, bei dem es sich handelt um ein vinylaromatisches Monomeres, ein olefinisch ungesättigtes Nitril oder einen Ester der Formel

$CH_2{=}C{-}COOR_2,$
|
$R_1$

worin $R_1$ Wasserstoff, eine Alkylgruppe mit 1 bis 4 Kohlenstoffatomen oder ein Halogen und $R_2$ eine Alkylgruppe mit 1 bis 6 Kohlenstoffatomen darstellen, wobei das kautschukartige Polymere 50 bis 100 Gew.-% polymerisiertes konjugiertes Dien and 0 bis 50 Gew.-% Comonomeres enthält, und einer zweiten Copolymerkomponente (II), dadurch gekennzeichnet, daß es sich bei der zweiten Copolymerkomponente (II) um ein Copolymeres von Methylmethacrylat und Styrol handelt, das 50 bis 70 Gew.-% methylmethacrylat und 50 bis 30 Gew.-% Styrol enthält, und daß die Mischung 50 bis 98 Gew.-% Copolymerkomponente (I) und 50 bis 2 Gew.-% Copolymerkomponente (II) enthalt.

2. Mischung nach Anspruch 1, in der das olefinisch ungesättigte Nitril der Komponente I(A) ein $\alpha,\beta$-olefinisch ungesättigtes Mononitril der Formel ist

$$CH_2=\underset{\substack{|\\ R}}{C}-CN$$

worin R Wasserstoff, eine Alkylgruppe mit 1 bis 4 Kohlenstoffatomen oder ein Halogen bedeutet.

3. Mischung nach Anspruch 2, in der das Nitril Acrylnitril ist.

4. Mischung nach einem der Ansprüche 1 bis 3, in der es sich bei der Monomerkomponente I(B) um ein vinylaromatisches Monomeres handelt.

5. Mischung nach Anspruch 4, in der es sich bei dem vinylaromatischen Monomeren um Styrol handelt.

6. Mischung nach einem der Ansprüche 1 bis 5, in der es sich bei dem konjugierten Dienmonomeren um Butadien oder Isopren handelt.

7. Mischung nach Anspruch 6, in der es sich bei dem kautschukartigen Polymeren I(C) um einen Butadien-Styrol-Kautschuk handelt.

8. Mischung nach einem der Ansprüche 1 bis 7, die 50 bis 95 Gew.-% Komponente (I) und 50 bis 5 Gew.-% Komponente (II) enthält.

9. Mischung nach einem der Ansprüche 1 bis 9, in der die Komponente I 70 bis 90 Gew.-% Komponente (A) und 30 bis 10 Gew.-% Komponente (B) enthält.

**Revendications**

1. Mélange de deux résines thermoplastiques, comprenant un premier composant copolymère (I), lequel composant copolymère a été préparé par la polymérisation de 100 parties en poids de:

(A) plus de 50% en poids d'au moins un nitrile à insaturation oléfinique et

(B) moins de 50% en poids, sur la base du poids combiné de (A) et de (B), d'un composant monomère copolymérisable avec le nitrile à insaturation oléfinique, en présence de 0 à 40 parties en poids de

(C) un polymère du type caoutchouc, d'un diène conjugué monomère, et facultativement d'au moins un comonomère qui est un monomère vinyl-aromatique, un nitrile à insaturation oléfinique ou un ester de formule

$$CH_2=\underset{\substack{|\\ R_1}}{C}-COOR_2,$$

où $R_1$ représente l'hydrogène, un groupe alkyle à 1 à 4 atomes de carbone ou un halogène, et $R_2$ est un groupe alkyle à 1 à 6 atomes de carbone, le polymère du type caoutchouc contenant de 50 à 100% en poids du diène conjugué polymérisé et de 0 à 50% en poids du comonomère, et un deuxième composant copolymère (II), caractérisé par le fait que le deuxième composant copolymère (II) est un copolymère de méthacrylate de méthyle et de styrène contenant de 50 à 70% en poids de méthacrylate de méthyle et de 50 à 30% en poids de styrène, et par le fait que le mélange contient de 50 à 98% en poids du composant copolymère (I) et de 50 à 2% en poids du composant copolymère (II).

2. Mélange selon la revendication 1, caractérisé par le fait que le nitrile à insaturation oléfinique du composant I (A) est un mononitrile à insaturation $\alpha,\beta$-oléfinique ayant la formule:

$$CH_2=\underset{\substack{|\\ R}}{C}-CN,$$

où R représente l'hydrogène, un groupe alkyle à 1 à 4 atomes de carbone ou un halogène.

3. Mélange selon la revendication 2, caractérisé par le fait que le nitrile est l'acrylonitrile.

4. Mélange selon l'une des revendications 1 à 3, caractérisé par le fait que le composant monomère I (B) est un monomère vinyl-aromatique.

5. Mélange selon la revendication 4, caractérisé par le fait que le monomère vinyl-aromatique est le styrène.

6. Mélange selon l'une des revendications 1 à 5, caractérisé par le fait que le diène conjugué monomère est le butadiène ou l'isoprène.

7. Mélange selon la revendication 6, caractérisé par le fait que le polymère du type caoutchouc I (C) est un caoutchouc de butadiène-styrène.

8. Mélange selon l'une des revendications 1 à 7, qui contient de 50 à 95% en poids du composant (I) et 50 à 5% en poids du composant (II).

9. Mélange selon l'une des revendications 1 à 9, dans lequel le composant (I) contient de 70 à 90% en poids du composant (A) et de 30 à 10% en poids du composant (B).